# EUROPEAN PATENT APPLICATION

(11) **EP 3 978 872 A1**
(43) Date of publication of application: **06.04.2022**
(21) Application number: 20841517.4
(22) Date of filing: 24.06.2020
(51) Int. Cl.: G01C 15/00, B66C 13/46

(54) **GUIDANCE SYSTEM**

(30) Priority: 18.07.2019 JP 2019132887
(71) Applicant: Kobelco Construction Machinery Co., Ltd., Hiroshima 731-5161 (JP)
(72) Inventor: KAMIMURA, Yusuke, Hiroshima-shi, Hiroshima 731-5161 (JP); YAMAZAKI, Yoichiro, Hiroshima-shi, Hiroshima 731-5161 (JP); YAMASHITA, Koji, Hiroshima-shi, Hiroshima 731-5161 (JP); FUKUO, Nobuhiro, Hiroshima-shi, Hiroshima 731-5161 (JP); TAKAGI, Norio, Hiroshima-shi, Hiroshima 731-5161 (JP); IINO, Takayuki, Hiroshima-shi, Hiroshima 731-5161 (JP); SOGA, Kaisuke, Hiroshima-shi, Hiroshima 731-5161 (JP)
(74) Representative: TBK
(86) International application number: PCT/JP2020/024689
(87) International publication number: WO 2021/010108

(57) **Abstract**

To allow a worker to visually recognize information for assisting transportation of a transport object and the transport object at the same time. A guidance system (1) includes a guidance device (40) and a controller (80). The guidance device (40) has a display portion (70). The controller (80) stores information of a target position (P1) of a transport object (11). The controller (80) calculates a detected position (P2) which is a current position of the transport object (11) based on a detection result of a detection portion (45), and further calculates a position deviation which is a deviation of the detected position P2 from a target position (P1). The display portion (70) displays information of the position deviation.

## Description

### Technical Field

The present invention relates to a guidance system for assisting transportation of a transport object.

### Background Art

For example, Patent Literature 1 discloses a technique of transporting a transport object by a work machine. In the technique disclosed in Patent Literature 1, a direction in which a transport object (a road ancillary continuous structure in Patent Literature 1) is to be moved and the like are displayed on a display portion (a display device in Patent Literature 1).

### Citation List

### Patent Literature

Patent Literature 1: JP 2017-25633 A

Patent Literature 1 describes that a display portion that displays a direction in which a transport object is to be moved is a portable tablet held by a worker positioned near the transport object. Therefore, it is difficult for an operator of a work machine to visually recognize display on the display portion. Even if the display portion is disposed in a cab of the work machine, it is difficult for the operator to visually recognize the display portion and the transport object at the same time.

### Summary of Invention

An object of the present invention is to provide a guidance system allowing a worker operating a work machine to visually recognize information for assisting transportation of a transport object and the transport object at the same time.

The present invention provides a guidance system that assists work for transporting a transport object to a target position, the guidance system including a guidance device attachable to a transport object, and a controller. The guidance device includes: a frame portion attachable to the transport object so as to be transported to a target position integrally with the transport object; a detection portion that is provided at least on the frame portion and is capable of detecting coordinates and an attitude of the transport object to which the frame portion is attached; and a display portion provided in the frame portion. The controller includes: a storage portion that stores information of a target position of the transport object; a position calculation portion that calculates a detected position that is a current position of the transport object based on a detection result of the detection portion, and further calculates a position deviation that is a deviation of the detected position from the target position; and an input portion that inputs a signal corresponding to the position deviation to the display portion and causes the display portion to display information of the position deviation.

### Brief Description of Drawings

FIG. 1 is a view of a guidance system according to an embodiment of the present invention as viewed from above.
FIG. 2 is a side view of a work machine and the like of the guidance system illustrated in FIG. 1.
FIG. 3 is a block diagram of the guidance system illustrated in FIG. 1.
FIG. 4 is a perspective view of a transport object and a guidance device illustrated in FIG. 2.
FIG. 5 is a perspective view of the guidance device illustrated in FIG. 4.
FIG. 6 is a view of the transport object and the guidance device illustrated in FIG. 2 as viewed from above, the view illustrating a configuration example 1 of a detection portion.
FIG. 7 is a cross-sectional view on arrow taken along line VII-VII of FIG. 6.
FIG. 8 is a view of the transport object and the guidance device illustrated in FIG. 6 as viewed from the front.
FIG. 9 is a view corresponding to FIG. 6, the view illustrating a configuration example 2 of the detection portion illustrated in FIG. 6.
FIG. 10 is a view corresponding to FIG. 6, the view illustrating a configuration example 3 of the detection portion illustrated in FIG. 6.
FIG. 11 is a diagram illustrating a relationship between presence/absence of a matching display and a position deviation which are displayed by the display portion illustrated in FIG. 5.

### Description of Embodiment

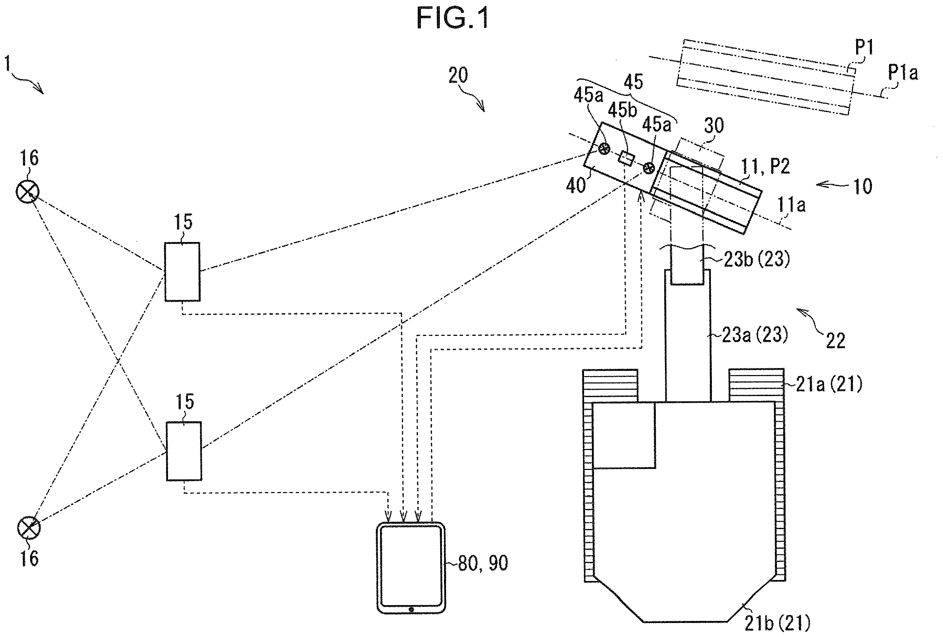

A guidance system 1 according to an embodiment of the present invention will be described with reference to FIG. 1 to FIG. 11.

FIG. 1 is a view of the guidance system according to an embodiment of the present invention as viewed from above.

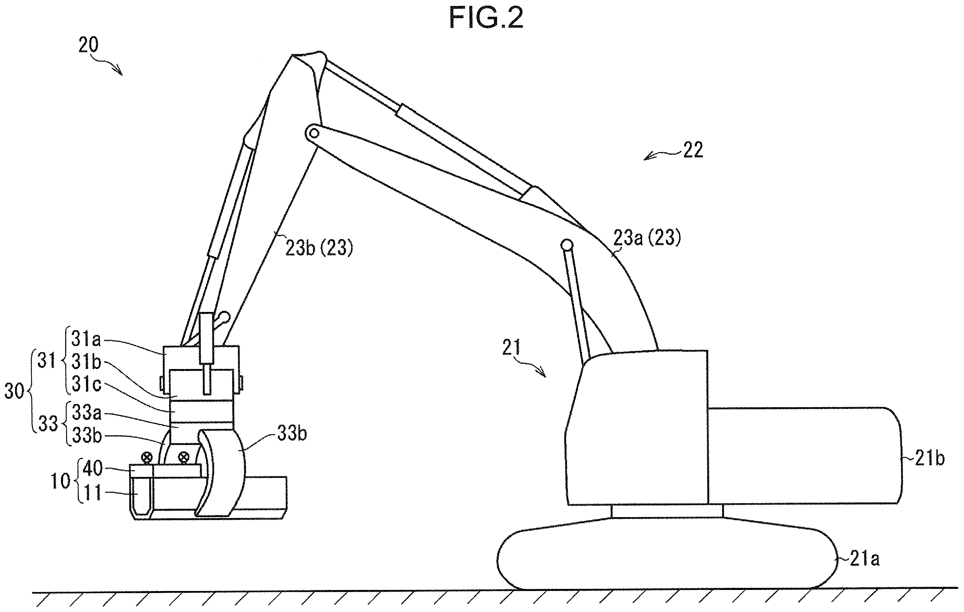

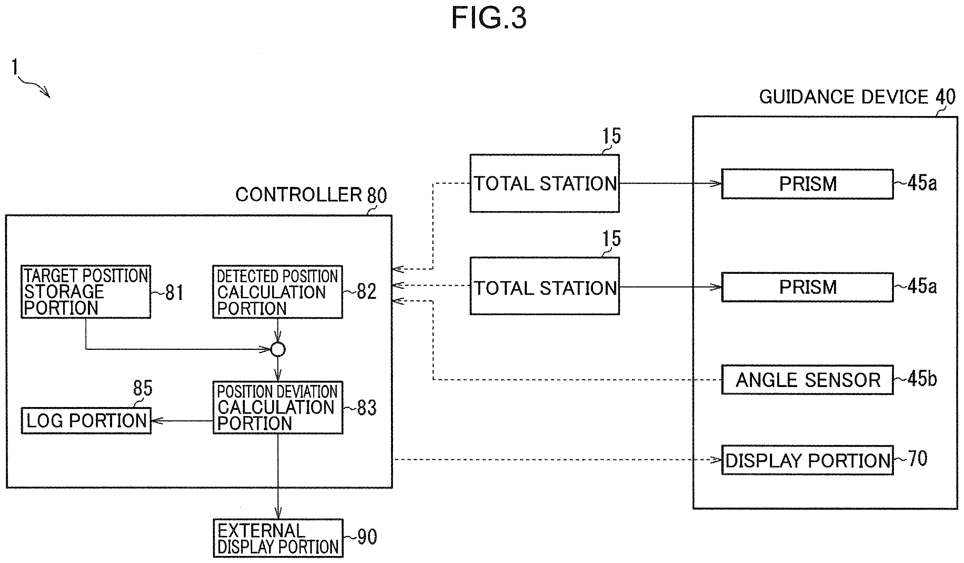

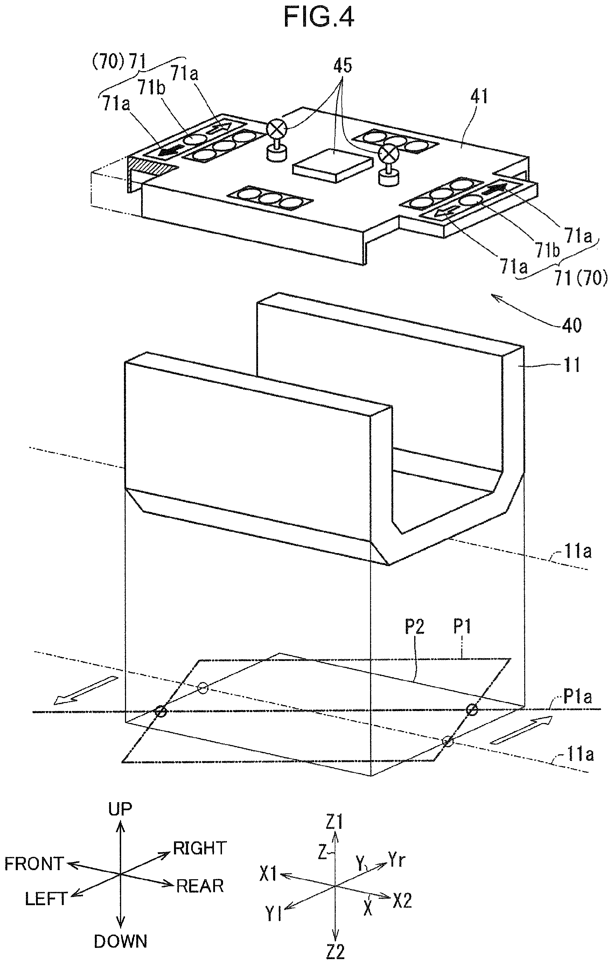

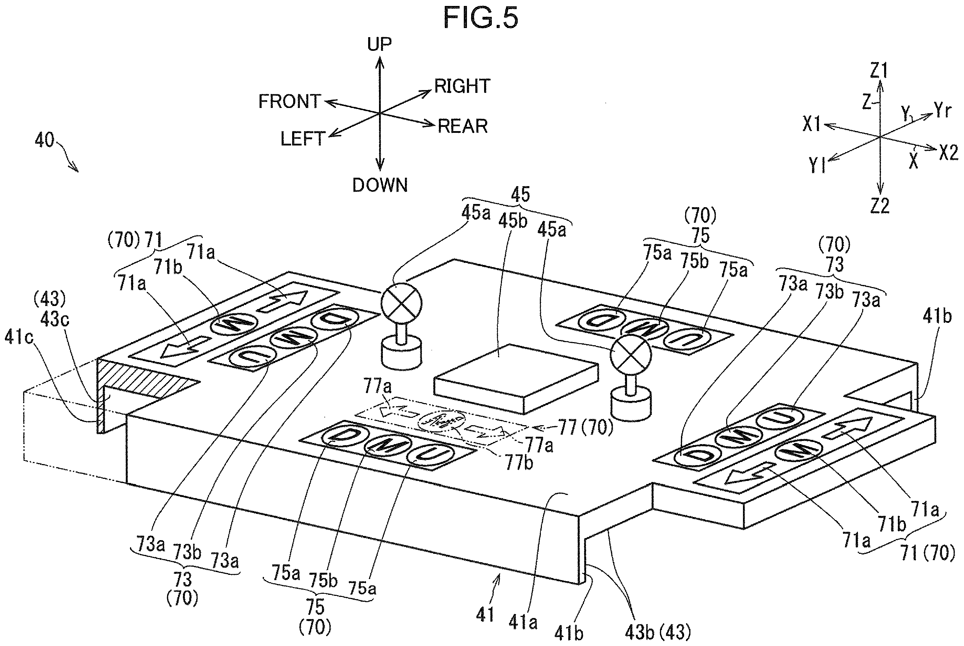

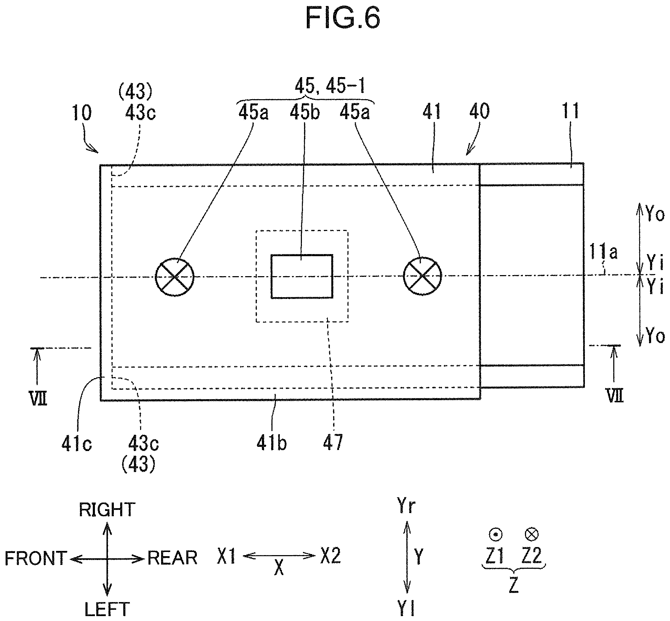

FIG. 2 is a side view of a work machine 20 and the like of the guidance system 1 illustrated in FIG. 1. FIG. 3 is a block diagram of the guidance system 1 illustrated in FIG. 1. FIG. 4 is a perspective view of a transport object 11 and a guidance device 40 illustrated in FIG. 2. FIG. 5 is a perspective view of the guidance device 40 illustrated in FIG. 4. FIG. 6 is a view of the transport object 11 and the guidance device 40 illustrated in FIG. 2 as viewed from above, the view illustrating a configuration example 1 of a detection portion 45.

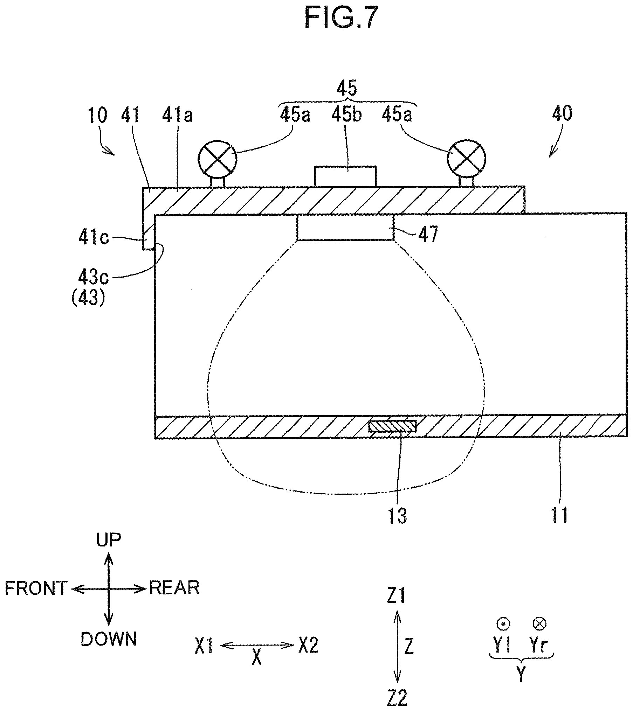

As illustrated in FIG. 1, the guidance system 1 is a system that assists (directs) the transportation work of the transport object 11 to a target position P1. The guidance system 1 includes an electronic tag 13 (see FIG. 7), a total station 15, the work machine 20, the guidance device 40, a controller 80, and an external display portion 90 illustrated in FIG. 3.

As illustrated in FIG. 2, the transport object 11 is an object (an object to be transported, a structure) to be transported by the work machine 20. The transport object 11 is, for example, a structure provided on a road, in a parking lot, a house, or the like. The transport object 11 is made of, for example, concrete, is made of, for example, a precast material, and is, for example, a U-shaped groove. As illustrated in FIG. 4, a line serving as a reference for arrangement of the transport object 11 is defined as a reference line 11a. The reference line 11a is a line extending in a longitudinal direction of the transport object 11, and is a line passing through a central portion in a width direction (a right-left direction, directions will be described later) of the transport object 11. The reference line 11a may pass through, for example, a bottom portion (lower portion) of the transport object 11 or may pass through a central portion in a height direction of the transport object 11. Note that the reference for the arrangement of the transport object 11 may be variously set. For example, a line extending in the width direction of the transport object 11 may be set as a reference line for arrangement of the transport object 11. For example, a specific point of the transport object 11 may be set as a reference point.

### (Direction)

Directions related to the transport object 11 and directions related to the guidance device 40 attached to the transport object 11 are defined as follows. The direction in which the reference line 11a extends (e.g., the longitudinal direction of the transport object 11) is defined as a front-rear direction X. One orientation in the front-rear direction X is defined as a front direction XI, and the opposite orientation is defined as a rear direction X2. A direction orthogonal to the reference line 11a and becoming a horizontal direction when the transport object 11 is placed on a horizontal plane is defined as a width direction Y. As illustrated in FIG. 6, in the width direction Y, an orientation approaching the center of the transport object 11 in the width direction is defined as a width direction inward direction Yi, and an orientation separating from the center of the transport object 11 in the width direction is defined as a width direction outward direction Yo. In the width direction Y, a right direction when facing the front direction X1 is defined as a right direction Yr, and a left direction when facing the front direction X1 is defined as a left direction Y1. As illustrated in FIG. 4, a direction orthogonal to each of the front-rear direction X and the width direction Y is defined as a height direction Z (up-down direction). In the height direction Z, an upward orientation when the transport object 11 is placed on the horizontal plane is defined as an upward direction Z1, and the opposite orientation is defined as a downward direction Z2. Note that each of the above directions is for describing the guidance system 1 according to the present embodiment, and does not limit a structure and a use mode of the guidance system according to the present invention.

FIG. 7 is a cross-sectional view on arrow taken along line VII-VII of FIG. 6 (a cross-sectional view taken along arrow VII).

The electronic tag 13 stores and transmits information of the transport object 11 shown in FIG. 7. The electronic tag 13 is provided (attached) in the transport object 11. The electronic tag 13 may be embedded in the transport object 11 or affixed to the transport object 11. The electronic tag 13 is, for example, a radio frequency identifier (RFID) tag.

The total station 15 is a device that detects a position of a prism 45a (described later) illustrated in FIG. 1. The total station 15 detects a distance from the total station 15 to the prism 45a and a direction of the prism 45a with respect to the total station 15. The total station 15 has a function of continuing automatic tracking of the prism 45a (automatic tracking function). The coordinates (machine point) of the total station 15 are obtained by the backward intersection on the basis of two surveying reference points 16 (known coordinates). As a result, the coordinates of the total station 15 are associated with a coordinate system of a work site.

### (Position of Transport Object 11)

Hereinafter, the position of the transport object 11 in the coordinate system of the work site (a three-dimensional coordinate system associated with the surveying reference point 16) will be simply referred to as "the position of the transport object 11" or the like. The "position of the transport object 11" includes information on each of the coordinates of the transport object 11 and an attitude of the transport object 11. The coordinates of the transport object 11 are coordinates (position coordinates) indicating the position of the transport object 11 in the coordinate system of the work site. The attitude of the transport object 11 is a rotation angle of the transport object 11 in the coordinate system of the work site. The attitude of the transport object 11 includes an inclination of the transport object 11 with respect to the horizontal plane (an angle of an inclination, an orientation of an inclination) and an orientation of the transport object 11 when viewed from above (e.g., an orientation of the reference line 11a). For example, the attitude of the transport object 11 is indicated by an angle (a yaw angle, a pitch angle, a roll angle) in each of a yaw direction, a pitch direction, and a roll direction. A rotation direction of the transport object 11 around an axis extending in the height direction of the transport object 11 illustrated in FIG. 4 is defined as a yaw direction, a rotation direction of the transport object 11 around an axis extending in the width direction is defined as a pitch direction, and a rotation direction of the transport object 11 around an axis extending in the front-rear direction is defined as a roll direction.

As illustrated in FIG. 2, the work machine 20 is a machine that conducts work of transporting the transport object 11. The work machine 20 is, for example, a construction machine that conducts construction work, and is, for example, an excavator. The work machine 20 includes a machine main body 21 and an attachment 22.

The machine main body 21 (machine body) includes a lower travelling body 21a and an upper slewing body 21b. The lower travelling body 21a, which causes the work machine 20 to travel, is capable of travelling on the ground. The upper slewing body 21b is mounted on the lower travelling body 21a so as to be turnable around a turning center axis extending in the up-down direction.

The attachment 22 (work attachment) is a device for conducting work (transporting work) of transporting the transport object 11. The attachment 22 is attached to the machine main body 21, more specifically, to the upper slewing body 21b. The attachment 22 includes a proximal end attachment 23 and a distal end attachment 30.

The proximal end attachment 23 is a portion, of the attachment 22, disposed on a proximal end side (the side attached to the upper slewing body 21b). The proximal end attachment 23 includes a boom 23a and an arm 23b. The boom 23a is mounted on the upper slewing body 21b so as to be raised and lowered (rotatable up and down). A direction in which a rotation axis of the boom 23a extends with respect to the upper slewing body 21b is defined as a "lateral direction". The arm 23b is attached to the boom 23a so as to be rotatable around the rotation axis extending in the lateral direction.

The distal end attachment 30 is attached to a distal end portion (a portion opposite to the "proximal end side") of the proximal end attachment 23, and is particularly attached to a distal end portion of the arm 23b. As a result, the distal end attachment 30 is disposed at a distal end portion of the attachment 22. The distal end attachment 30 includes a rotation device 31 and a gripping device 33.

The rotation device 31 (tilt rotor) is attached to the distal end portion of the proximal end attachment 23, and is particularly attached to the distal end portion of the arm 23b. The rotation device 31 causes the gripping device 33 to rotate (e.g., rotate in an arbitrary direction) with respect to the arm 23b. The rotation device 31 causes the gripping device 33 to rotate around three axes orthogonal to each other with respect to the arm 23b. The rotation device 31 includes an attachment portion 31a, a tilt portion 31b, and a rotation portion 31c. The attachment portion 31a is attached to the arm 23b so as to be rotatable around a rotation axis extending in the lateral direction. The tilt portion 31b is rotatably attached to the attachment portion 31a. The tilt portion 31b is rotatable (tilt operation) with respect to the arm 23b so as to tilt in the lateral direction with respect to a longitudinal direction of the arm 23b. The rotation portion 31c is rotatably attached to the tilt portion 31b. The rotation portion 31c is rotatable (rotate operation) with respect to the tilt portion 31b around a center axis of the tilt portion 31b. As a result, the rotation portion 31c is rotatable around the three axes orthogonal to each other with respect to the arm 23b.

The gripping device 33 grips the transport object 11 (an integrated unit 10) to which the guidance device 40 is attached. The gripping device 33 is attached to the rotation device 31. The gripping device 33 is rotatable (e.g., rotatable in an arbitrary direction) with respect to the proximal end attachment 23 (more specifically, the arm 23b) by the operation of the rotation device 31. The gripping device 33 rotates in conjunction with each of the rotation of the attachment portion 31a with respect to the arm 23b, the rotation (tilt operation) of the tilt portion 31b with respect to the attachment portion 31a, and the rotation (rotate operation) of the rotation portion 31c with respect to the tilt portion 31b. The gripping device 33 includes a base portion 33a and a gripping portion 33b. The base portion 33a is fixed to the rotation portion 31c. The gripping portion 33b is a portion that comes into contact with the transport object 11 and grips the transport object 11. For example, a pair of gripping portions 33b is provided on the base portion 33a. The pair of gripping portions 33b opens and closes (rotates) with respect to the base portion 33a, and grips (grasps) the integrated unit 10 so as to sandwich the unit from the outside in the width direction. Note that the gripping portion 33b may grip the transport object 11 so as to push and spread (stretch, strut) the transport object 11 from the inside of the transport object 11 (not illustrated).

The guidance device 40 (jig) assists and directs the transportation (movement) of the transport object 11 (guidance). As illustrated in FIG. 4, the guidance device 40 is attachable to the transport object 11. The guidance device 40 is a separate body from the transport object 11 and is detachable from the transport object 11. The guidance device 40 is a separate body from the work machine 20 illustrated in FIG. 2 and is a separate body from the distal end attachment 30. Note that the guidance device 40 may be attached to the distal end attachment 30 (e.g., the base portion 33a or the rotation portion 31c) or may be fixed to the distal end attachment 30. Hereinafter, description will be made of a case where the guidance device 40 and the distal end attachment 30 are separate bodies. As illustrated in FIG. 5, the guidance device 40 includes a frame portion 41, a positioning portion 43, a detection portion 45, a reading device 47 (see FIG. 7), and a display portion 70.

As illustrated in FIG. 4, the frame portion 41 can be attached to the transport object 11 so as to be transported to the target position P1 integrally with the transport object 11. The frame portion 41 can be attached to, for example, an upper portion of the transport object 11. As illustrated in FIG. 5, the frame portion 41 includes a frame main body portion 41a, a width stopper portion 41b, and a front-rear stopper portion 41c. The frame main body portion 41a has, for example, a plate shape or the like, and may have a rectangular parallelepiped shape or the like.

As illustrated in FIG. 6, the width stopper portion 41b restricts the movement of the guidance device 40 in a width direction with respect to the transport object 11. The width stopper portion 41b can be brought into contact with (e.g., can be brought into surface contact with) an outer surface of the transport object 11 in the width direction. The width stopper portion 41b comes into contact with one surface (e.g., a left side surface) of both surfaces (a left side surface and a right side surface) on the outer side in the width direction of the transport object 11. The width stopper portion 41b (see FIG. 5) in contact with the other surface (e.g., the right side surface) on the outer side in the width direction of the transport object 11 may be provided or may not be provided. As illustrated in FIG. 5, the width stopper portion 41b protrudes downward from an outer portion of the frame main body portion 41a in a width direction. The width stopper portion 41b has, for example, a plate shape. The width stopper portion 41b is fixed to the frame main body portion 41a.

As illustrated in FIG. 6, the front-rear stopper portion 41c restricts the movement of the guidance device 40 in a front-rear direction with respect to the transport object 11. The front-rear stopper portion 41c can be brought into contact with a front surface (a surface on one side in the front-rear direction) of the transport object 11. The front-rear stopper portion 41c (not illustrated) that can be brought into contact with a rear surface (the other side surface in the front-rear direction) of the transport object 11 may be provided or may not be provided. As illustrated in FIG. 5, the front-rear stopper portion 41c protrudes downward from an outer portion in a front-rear direction (specifically, a front portion) of the frame main body portion 41a. The front-rear stopper portion 41c has, for example, a plate shape. The front-rear stopper portion 41c is fixed to the frame main body portion 41a.

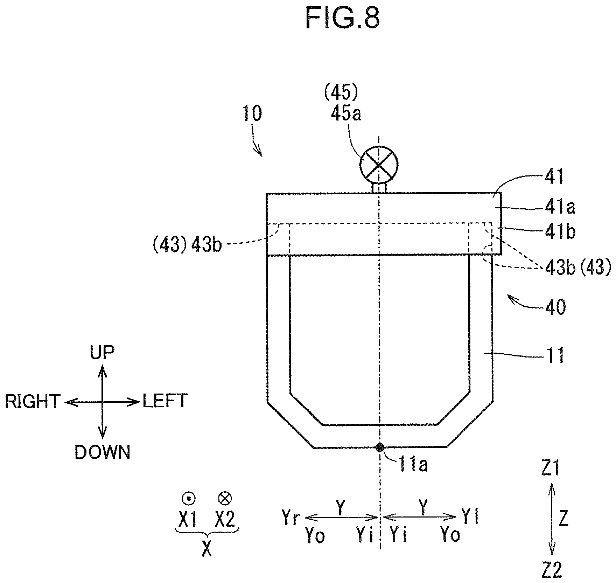

FIG. 8 is a view of the transport object 11 and the guidance device 40 illustrated in FIG. 6 as viewed from the front.

The positioning portion 43 positions a relative position of the guidance device 40 with respect to the transport object 11 (see FIG. 6). The positioning portion 43 includes a reference line positioning portion 43b (see FIG. 8) and a longitudinal direction positioning portion 43c (see FIG. 6).

As illustrated in FIG. 8, the reference line positioning portion 43b positions a relative position of the reference line 11a of the transport object 11 with respect to the guidance device 40. The reference line positioning portion 43b positions the guidance device 40 and the transport object 11 such that the relative positions of the guidance device 40 and the reference line 11a fall within a predetermined allowable range. Specifically, the reference line positioning portion 43b is configured with a lower surface of the frame main body portion 41a that comes into contact with an upper surface of the transport object 11, and an inner surface in the width direction of the width stopper portion 41b that comes into contact with the outer surface in the width direction of the transport object 11. The lower surface of the frame main body portion 41a positions the reference line 11a in the height direction with respect to the guidance device 40. The inner surface in the width direction of the width stopper portion 41b positions the reference line 11a in the width direction with respect to the guidance device 40.

As illustrated in FIG. 6, the longitudinal direction positioning portion 43c positions a relative position of the transport object 11 with respect to the guidance device 40 in the longitudinal direction (the front-rear direction) of the transport object 11. The longitudinal direction positioning portion 43c positions the guidance device 40 and the transport object 11 such that the relative positions, in the front-rear direction, of the guidance device 40 and the transport object 11 fall within a predetermined allowable range. Specifically, the longitudinal direction positioning portion 43c is configured with a rear surface of the front-rear stopper portion 41c that comes into contact with the front surface of the transport object 11. Hereinafter, a state in which the guidance device 40 is positioned with respect to the transport object 11 will be described.

The detection portion 45 is a part for detecting the position of the transport object 11 by detecting the position of the guidance device 40. As illustrated in FIG. 5, the detection portion 45 is provided at least on the frame portion 41 and is fixed to the frame portion 41. The detection portion 45 is attached to an upper surface of the frame portion 41. As illustrated in FIG. 6, the detection portion 45 includes at least the prism 45a, and may further include an angle sensor 45b. The coordinates of the prism 45a (collimating prism) are detected by the total station 15 (see FIG. 1). Note that the total station 15 may constitute a part of the detection portion 45. In this case, the detection portion 45 is not limited to one provided in the frame portion 41. The angle sensor 45b detects the attitude of the transport object 11. Depending on the position of the prism 45a and the number of the prisms 45a in the frame portion 41, whether the angle sensor 45b is necessary or not varies and the number of axes for which the rotation angle needs to be detected by the angle sensor 45b varies. Specifically, the detection portion 45 is configured as in the following [Configuration Example 1] to [Configuration Example 3], for example.

### [Configuration Example 1]

In the configuration example 1 (a detection portion 45 -1), two prisms 45a are provided. The two prisms 45a are disposed at positions (shifted places) separated from each other in the front-rear direction. The positions of the two prisms 45a in the width direction are the same. In other words, when viewed from above, the two prisms 45a pass through a line (e.g., the reference line 11a) extending in the front-rear direction. In this case, the yaw angle and the pitch angle of the transport object 11 can be calculated based on the coordinates of the two prisms 45a. On the other hand, the roll angle (a rotation angle around the axis extending in the front-rear direction) of the transport object 11 cannot be calculated from the coordinates of the two prisms 45a. Therefore, the angle sensor 45b detects a rotation angle of one axis (specifically, the roll angle of the transport object 11).

### [Configuration Example 2]

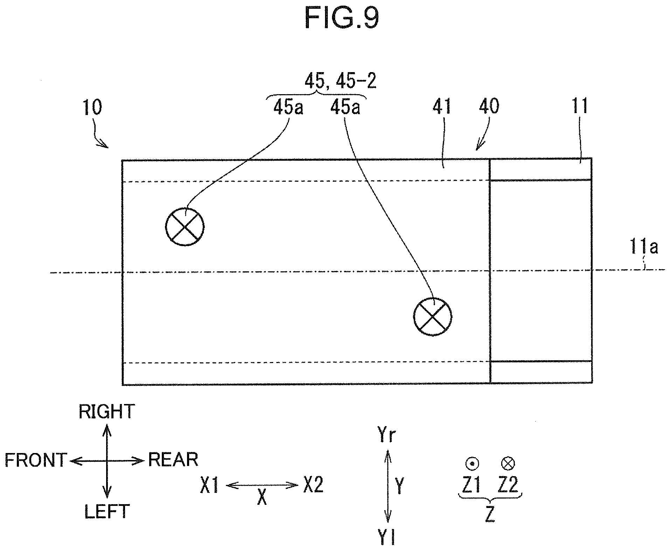

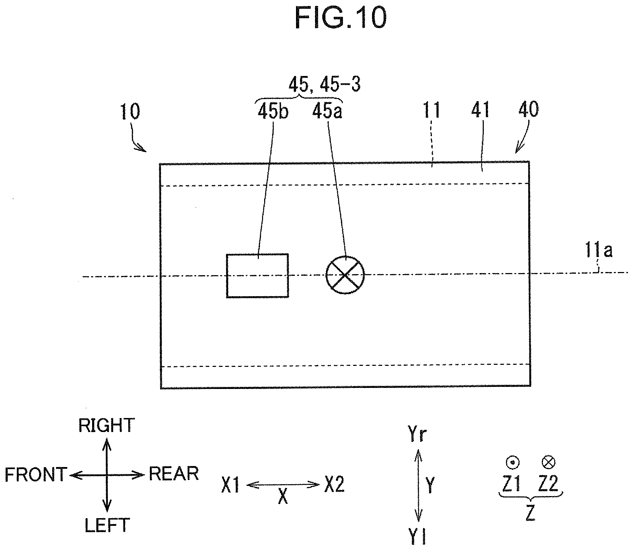

FIG. 9 is a view corresponding to FIG. 6, the view illustrating the configuration example 2 of the detection portion 45 illustrated in FIG. 6. As illustrated in FIG. 9, in the configuration example 2 (a detection portion 45 -2), two prisms 45a are provided. The two prisms 45a are disposed at positions separated from each other in the front-rear direction, and are disposed at positions separated from each other in the width direction (the right-left direction). In this case, the yaw angle, the pitch angle, and the roll angle of the transport object 11 can be calculated based on the coordinates of the two prisms 45a. Therefore, in the configuration example 2, the angle sensor 45b (see FIG. 6) is unnecessary. In FIG. 9, and FIG. 10 described later, illustration of the width stopper portion 41b and the front-rear stopper portion 41c illustrated in FIG. 6 is omitted.

### [Configuration Example 3]

FIG. 10 is a view corresponding to FIG. 6, the view illustrating the configuration example 3 of the detection portion 45 illustrated in FIG. 6. As illustrated in FIG. 10, in the configuration example 3 (a detection portion 45 -3), one prism 45a is provided. The prism 45a is disposed at a known relative position with respect to the transport object 11 (e.g., the center position of the transport object 11 when viewed from the height direction.). In this case, the attitude of the transport object 11 cannot be calculated from the coordinates of the prism 45a. Therefore, the angle sensor 45b detects three axes, specifically, the yaw angle, the pitch angle, and the roll angle of the transport object 11.

Note that the detection portion 45 may have a configuration other than the above [Configuration Example 1] to [Configuration Example 3] as long as the detection portion can detect the coordinates and the attitude of the transport object 11. Furthermore, depending on a type, a shape, and the like of the transport object 11, only a part of the information of the coordinates (x-axis, y-axis, z-axis) and the attitude (yaw angle, pitch angle, roll angle) may be detected by the detection portion 45. Specifically, in a case where the transport object 11 can be arranged at an arbitrary roll angle such as a case where the transport object 11 has a cylindrical shape, the roll angle may not be detected by the detection portion 45.

As illustrated in FIG. 7, the reading device 47 reads information (described later) of the transport object 11 from the electronic tag 13 and transmits the read information to the controller 80 (see FIG. 3). The reading device 47 is provided in the frame portion 41. The reading device 47 includes an antenna and the like. The antenna of the reading device 47 is provided, for example, on a surface of the frame portion 41 facing the electronic tag 13 (specifically, a lower surface of the frame portion 41).

The display portion 70 (a deviation display portion, a deviation display) displays information (guidance information) for assisting (directing) the transportation of the transport object 11 illustrated in FIG. 4. The display portion 70 visually notifies the surroundings of the display portion 70 of information on a position deviation (as described later, a deviation of a current detected position P2 from the target position P1). The display portion 70 is provided in the frame portion 41. The display portion 70 is integrated with the frame portion 41. The display portion 70 is disposed at a position easily visually recognizable by a worker in the vicinity of the transport object 11. The display portion 70 is disposed at a position easily visually recognizable also by an operator (machine operator) of the work machine 20 (see FIG. 2). For example, the display portion 70 is disposed outside the gripping device 33 (at a position that is not hidden by the gripping device 33). For example, the display portion 70 is disposed on the upper surface of the frame portion 41 and is disposed in parallel with the upper surface of the transport object 11. The display portion 70 may be disposed in parallel with a surface other than the upper surface of the transport object 11 (an outer surface in at least one of the front-rear direction and the width direction) (not illustrated). The display portion 70 includes a light emitting portion, and includes, for example, a light emitting diode (LED). Specifically, for example, as illustrated in FIG. 5, the display portion 70 includes two yaw direction display portions 71, two pitch direction display portions 73, and two roll direction display portions 75 (details will be described later).

The controller 80 (see FIG. 3) conducts input/output, calculation, storage, and the like of signals. The controller 80 may be provided in the work machine 20 illustrated in FIG. 2 or may be provided in the guidance device 40 (may be built in or externally attached). As illustrated in FIG. 1, the controller 80 may be provided outside the work machine 20 and outside the guidance device 40. The controller 80 may be provided integrally with the external display portion 90. The controller 80 receives detected information from the total station 15 and the angle sensor 45b. As illustrated in FIG. 3, the controller 80 transmits information on a position deviation (described later) to the display portion 70. The controller 80 includes a target position storage portion 81, a detected position calculation portion 82, a position deviation calculation portion 83, and a log portion 85 (details of each portion will be described later).

The external display portion 90 is provided so as to be disposed outside the guidance device 40, that is, at a position away from the guidance device 40, and is provided separately from the display portion 70 of the guidance device 40. The external display portion 90 displays information on the position deviation. For example, the external display portion 90 may display the same information as the information displayed on the display portion 70. For example, the external display portion 90 may display information that is not displayed on the display portion 70 (e.g., information stored in the log portion 85). The external display portion 90 may be disposed inside the work machine 20 illustrated in FIG. 1 (e.g., inside a cab) or may be disposed outside the work machine 20. The external display portion 90 may be a device (e.g., a handy-type device) carried by a worker in the vicinity of the transport object 11. The external display portion 90 may be disposed at a position which can be visually recognized by a person (e.g., a person involved in construction) who is away from the site of the transportation work of the transport object 11.

### (Operation)

The guidance system 1 illustrated in FIG. 1 is configured to operate as follows.

### (Attachment of Guidance Device 40)

As illustrated in FIG. 4, the guidance device 40 is attached to (fitted in) the transport object 11. This work is conducted by manual work of a worker, for example. At this time, the positioning portion 43 illustrated in FIG. 8 comes into contact with the transport object 11. Specifically, the lower surface of the frame main body portion 41a comes into contact with the upper surface of the transport object 11. The inner surface of the width stopper portion 41b in the width direction comes into contact with the outer surface of the transport object 11 in the width direction. As illustrated in FIG. 6, the front-rear stopper portion 41c comes into contact with the front surface of the transport object 11. As a result, the guidance device 40 is positioned with respect to the transport object 11 (the relative position is uniquely determined). As a result, the detection portion 45 (the prism 45a or the like) is positioned with respect to the transport object 11. This brings about a state where the position of the transport object 11 can be calculated from the detection result of the detection portion 45.

### (Gripping of Transport Object 11)

As illustrated in FIG. 2, when the work machine 20 is operated by the worker's operation, the gripping device 33 grips an arbitrary part of the integrated unit 10. At this time, unless the prism 45a is hidden when viewed from the total station 15, which allows the total station 15 to track the prism 45a, the gripping device 33 need only grip an arbitrary part of the integrated unit 10. The gripping device 33 need only grip such an arbitrary part of the integrated unit 10 that facilitates handling of the integrated unit 10. As a result, the workability of the transportation work of the transport object 11 can be improved.

### (Example of Arrangement of Transport Object 11)

The transport object 11 illustrated in FIG. 1 is transported to the target position P1 and disposed (installed, laid). For example, in a case where the transport object 11 is a U-shaped groove, the transport object 11 may be disposed as follows. First, "the first transport object 11" is disposed at the target position P1. At this time, the first transport object 11 is disposed so as to have coordinates and an attitude matching the target coordinates and attitude. Thereafter, "the second and subsequent transport objects 11" are disposed continuously with each other so as to be in contact with each other in series along a passage line P1a (the position of the target reference line 11a). The second and subsequent transport objects 11 are disposed so as to be continuous with the transport objects 11 already disposed. In addition, the second and subsequent transport objects 11 are disposed such that the direction of the reference line 11a of the transport object 11 matches the direction of the passage line P1a (the attitude of the transport object 11 is matched with a target attitude). As a result, the coordinates of the second and subsequent transport objects 11 match the target coordinates. As described above, when the first transport object 11 is disposed, information of the coordinates and the attitude is required, and when the second and subsequent transport objects 11 are disposed, information of the attitudes is only required. Note that the above procedure of disposing the transport object 11 is an example, and the transport object 11 can be disposed following various procedures.

### (Operation of Controller 80 and the Like)

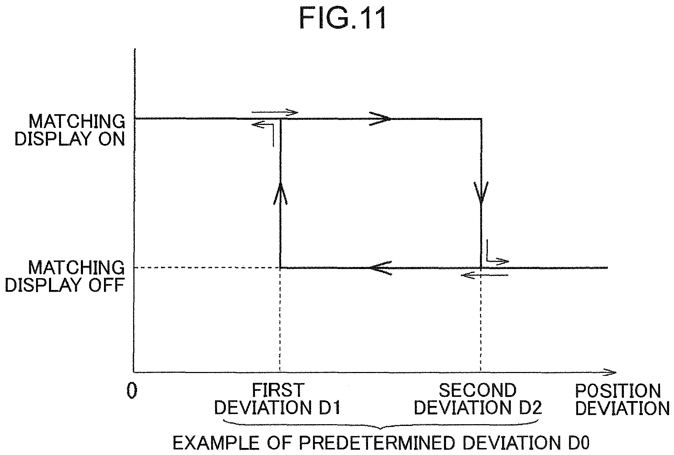

FIG. 11 is a diagram illustrating a relationship between presence/absence of a matching display and a position deviation which are displayed by the display portion 70 illustrated in FIG. 5. The outline of the operation of the controller 80 (see FIG. 3) and the like is as follows. In the target position storage portion 81 (see FIG. 3), information on the target position P1 of the transport object 11 illustrated in FIG. 4 is set (stored) in advance. The detected position calculation portion 82 (see FIG. 3) calculates the detected position P2, which is the current position of the transport object 11, based on a value detected using the detection portion 45. FIG. 4 illustrates the target position P1 and the current detected position P2 projected in the height direction. The position deviation calculation portion 83 (see FIG. 3) calculates a position deviation that is a deviation of the detected position P2 from the target position PI, and inputs a signal corresponding to the position deviation to the display portion 70 to cause the display portion 70 to display information of the position deviation. When the position deviation is equal to or less than a predetermined deviation D0 (see FIG. 11), the controller 80 (see FIG. 3) causes the display portion 70 to display a display (matching display) indicating that the target position P1 and the detected position P2 are in the matching state. Details, such as the operation, of the controller 80 are as follows.

### (Setting of Target Position P1)

In the target position storage portion 81 (see FIG. 3) (storage portion), information of the target position P1 of the transport object 11 is set (stored) in advance (before each calculation described below is conducted). The information of the target position P1 is information of the position of the target transport object 11 (installation position plan information, design information, three-dimensional information). The information of the target position P1 includes information of coordinates (target coordinates) of the target transport object 11 and information of an attitude (a target attitude) of the target transport object 11. For example, the information necessary for disposing the "first transport object 11" is the information of the target coordinates and the information of the target attitude. The information necessary for disposing the "second and subsequent transport objects 11" is information of the target attitude. The information of the target coordinates of the second and subsequent transport objects 11 is not necessarily set in the target position storage portion 81.

### (Calculation of Detected Position P2)

The detected position calculation portion 82 (see FIG. 3) calculates the detected position P2 based on a value (a detection result) detected by the detection portion 45. Specifically, the detected position P2 is a current (at present, actual) position of the transport object 11 which is calculated based on values detected by the detection portion 45 and the total station 15 (see FIG. 1). The detected position P2 includes current coordinates (detected coordinates) of the transport object 11 and a current attitude (detected attitude) of the transport object 11. For example, the information necessary for disposing the "first transport object 11" includes the information of the detected coordinates and the information of the detected attitude. The information necessary for disposing the "second and subsequent transport objects 11" is information of the detected attitude. In a case where the transport object 11 which is to be transported is the second or subsequent transport object, the detected position calculation portion 82 does not necessarily calculate the detected coordinates.

### (Acquisition of Information of Transport Object 11)

The controller 80 (see FIG. 3) acquires information (hereinafter, also referred to as "transport object information") necessary for transporting the transport object 11. The transport object information may include information of a type (e.g., whether the object is a U-shaped groove or a block) of the transport object 11. The transport object information may include information of dimensions of the transport object 11. The dimension information of the transport object 11 acquired by the controller 80 is, for example, information of a dimension from a part, of the transport object 11, positioned with respect to the guidance device 40 to an opposite part. Specifically, the transport object information may include information of a dimension from the front surface to the rear surface (the opposite surface) of the transport object 11 illustrated in FIG. 6 with which surfaces the front-rear stopper portion 41c is in contact (i.e., information of a length of the transport object 11 in the longitudinal direction). The transport object information may include information of dimensions in directions other than the front-rear direction.

The transport object information acquired by the controller 80 (see FIG. 3) can be acquired by various methods. For example, the transport object information may be acquired from an item provided (attached, adhered, embedded, etc.) in the transport object 11, and may be acquired from the electronic tag 13 (see FIG. 7), for example. The transport object information may be acquired from an object (e.g., a storage medium) different from the transport object 11. The transport object information may be acquired by input by a worker. In a case where the transport object information is the information of the dimensions of the transport object 11, the transport object information may be acquired by a device that measures the dimensions of the transport object 11. Specifically, for example, information of the length of the transport object 11 in the front-rear direction may be acquired by a device that measures a dimension from the front surface to the rear surface of the transport object 11 by sandwiching the front surface and the rear surface of the same.

### (Calculation of Position Deviation of Detected Position P2 from Target Position P1)

The position deviation calculation portion 83 (see FIG. 3) calculates a position deviation that is a deviation of the detected position P2 from the target position P1 illustrated in FIG. 4. The position deviation includes a coordinate deviation and an attitude deviation. The coordinate deviation is a deviation of the detected coordinates from the target coordinates. The attitude deviation is a deviation of the detected attitude from the target attitude. The attitude deviation is a deviation in the direction in which the reference line 11a extends from the direction in which the passage line P1a extends. For example, the information necessary for disposing the "first transport object 11" is information of the coordinate deviation and information of the attitude deviation. The information necessary for disposing the "second and subsequent transport objects 11" is information of the attitude deviation. In a case where the transport object 11 which is to be transported is the second or subsequent transport object, the position deviation calculation portion 83 (see FIG. 3) does not necessarily calculate the coordinate deviation. Note that the detected position calculation portion 82 and the position deviation calculation portion 83 constitute a position calculation portion of the present invention.

### (Display of Information Related to Position Deviation)

The controller 80 (see FIG. 3) causes the display portion 70 to display information of a position deviation. Therefore, the controller 80 further includes an input portion that inputs a signal corresponding to a position deviation (an attitude deviation, a coordinate deviation) to the display portion 70 and causes the display portion 70 to display information of the position deviation. Note that, for example, the position deviation calculation portion 83 may constitute the input portion. The information of the position deviation displayed by the display portion 70 includes information of an orientation of the position deviation. More specifically, the information of the position deviation displayed by the display portion 70 includes information on an orientation in which the detected position P2 is shifted with respect to the target position PI, that is, information on an orientation in which the transport object 11 should be moved. The information of the position deviation displayed by the display portion 70 may include information on a magnitude of the position deviation (see e.g., the matching display described later). The information of the position deviation displayed by the display portion 70 includes information of the coordinate deviation (e.g., an orientation and a magnitude of the coordinate deviation) and information of the attitude deviation (e.g., an orientation and a magnitude of the attitude deviation). Specifically, in a case where the display portion 70 displays information of an orientation of the coordinate deviation, the display portion 70 displays information on an orientation in which the detected coordinates are shifted from the target coordinates, that is, information on an orientation in which the transport object 11 should be translated. For example, in a case where the display portion 70 displays information of an orientation of the attitude deviation, the display portion 70 displays information on an orientation in which the detected attitude is shifted from the target attitude, that is, information on an orientation in which the transport object 11 should be rotationally moved.

### (Matching Display)

The controller 80 (see FIG. 3, the same applies to the controller 80 described below) causes the display portion 70 to display the "matching display" in a case where the magnitude of the position deviation is equal to or less than the predetermined deviation D0 (see FIG. 11). The predetermined deviation D0 (a deviation threshold) is a threshold set in advance in the controller 80, the threshold being related to the magnitude of the position deviation. The predetermined deviation D0 may be stored in the target position storage portion 81. The predetermined deviation D0 is set based on, e.g., an allowable value of the position deviation, and is set to a value equal to or less than an upper limit value of the allowable value of the position deviation. The "matching display" is a display indicating that the target position P1 and the detected position P2 are in the matching state (a state of matching or substantially matching).

This matching display is different from a display of an orientation of a position deviation. For example, a part of the display portion 70 where the matching display is conducted is different from a part where an orientation of a position deviation is displayed. Specifically, for example, when a position deviation in the yaw direction is in the matching state, the controller 80 causes the yaw direction matching display portion 71b, which is a portion different from the yaw direction deviation display portion 71a illustrated in FIG. 5, to conduct display (the same applies to the pitch direction and the roll direction). For example, the contents of the matching display (e.g., a shape or a color to be displayed) may be different from those of the display of an orientation of a position deviation. Since as described in the foregoing, the display portion 70 illustrated in FIG. 4 clearly indicates not only the orientation (of the position deviation) of the detected position P2 with respect to the target position P1 but also the target position P1 and the detected position P2 being in the matching state, the workability of transportation of the transport object 11 is improved. In a case where the position deviation is equal to or less than the predetermined deviation D0, the input portion inputs, to the display portion 70, a signal corresponding to the matching display which is a display indicating that the target position P1 and the detected position P2 match with each other, and causes the display portion 70 to display the matching display. The controller 80 further includes a determination portion (not illustrated) that determines a matching state between the target position P1 and the detected position P2.

The predetermined deviation D0 includes a threshold (a coordinate predetermined deviation) related to a coordinate deviation and a threshold (an attitude predetermined deviation) related to an attitude deviation. The display portion 70 conducts matching display (coordinate matching display) related to a coordinate deviation in a case where the coordinate deviation is equal to or less than a threshold related to a coordinate deviation (in a case of a coordinate matching state). The display portion 70 conducts matching display (attitude matching display) related to an attitude deviation in a case where the attitude deviation is equal to or less than a threshold related to an attitude deviation (in a case of an attitude matching display). For example, the coordinate matching display and the attitude matching display are preferably conducted for the "first transport object 11". For the "second and subsequent transport objects 11", the attitude matching display is preferably conducted, and the coordinate matching display does not necessarily be conducted.

In a case where the predetermined deviation D0 has only one value, the state in which the matching display is conducted and the state in which the matching display is not conducted (ON/OFF) may be repeatedly switched, so that the workability may be deteriorated. Therefore, as illustrated in FIG. 11, a threshold (a first deviation D1) at which the matching display is turned on and a threshold (a second deviation D2) at which the matching display is turned off are preferably set as different values. It is preferable that ON and OFF of the matching display have characteristics such as hysteresis. More specifically, the first deviation D1 (a first deviation threshold) and the second deviation D2 (a second deviation threshold) which is larger than the first deviation D1 are set in the controller 80 in advance. The first deviation D1 and the second deviation D2 may be stored in the target position storage portion 81. Each of the first deviation D1 and the second deviation D2 is a threshold (the predetermined deviation D0) related to a magnitude of a position deviation. When the position deviation changes from a value exceeding the first deviation D1 to a value equal to or less than the first deviation D1, the controller 80 causes the display portion 70 (see FIG. 5) to start (turn on) the matching display. On the other hand, when the position deviation changes from a value equal to or less than the second deviation D2 to a value exceeding the second deviation D2 in a case where the display portion 70 (see FIG. 5) displays the matching display, the controller 80 causes the display portion 70 to end the matching display. Therefore, in a case where the position deviation changes from a value exceeding the first deviation D1 to a value equal to or less than the first deviation D1, the input portion inputs, to the display portion 70, a signal corresponding to the matching display, which is a display indicating that the target position P1 and the detected position P2 match with each other, and causes the display portion 70 to start the matching display. Further, in a case where the position deviation changes from a value equal to or less than the second deviation D2 to a value exceeding the second deviation D2 while the display portion 70 displays the matching display, the input portion inputs a signal for ending the matching display to the display portion 70.

### (Specific Example of Display of Display Portion 70)

In the example illustrated in FIG. 5, display by the display portion 70 is conducted as follows. Here, description will be made of a case where two prisms 45a are provided. Further, description will be made herein mainly of the yaw direction display portion 71. Note that the display by the display portion 70 can be variously modified.

Each of the two yaw direction display portions 71 (translation display portions) displays information of the transport object 11 in the yaw direction (see FIG. 4, the same applies to the transport object 11 described below) and the like. The two yaw direction display portions 71 are provided at intervals in the front-rear direction. The yaw direction display portion 71 on the front side displays information of a position deviation of a front portion of the transport object 11 (e.g., information calculated from the coordinates of the prism 45a on the front side). The yaw direction display portion 71 on the rear side displays information of a position deviation of a rear portion of the transport object 11 (e.g., information calculated from the coordinates of the prism 45a on the rear side). Each of the two yaw direction display portions 71 includes a yaw direction deviation display portion 71a and a yaw direction matching display portion 71b.

The yaw direction deviation display portion 71a displays an orientation of a position deviation in the yaw direction. The yaw direction deviation display portion 71a includes a portion indicating that the orientation of the position deviation is on one side (e.g., the left side) and a portion indicating that the orientation of the position deviation is on the other side (e.g., the right side). Each yaw direction deviation display portion 71a displays an orientation in which the transport object 11 should be rotated. The yaw direction deviation display portion 71a may display a figure (e.g., an arrow) indicating an orientation in which the transport object 11 should be rotated, or may display a character ("right", "left", or the like). For example, a display color of the yaw direction deviation display portion 71a on the left side is different from a display color of the yaw direction deviation display portion 71a on the right side. In this case, the worker can easily know the orientation of the position deviation of the transport object 11 in the yaw direction.

A specific example of display of the yaw direction deviation display portion 71a is as follows. In the example illustrated in FIG. 4, when viewed along the up-down direction (the height direction), the target passage line P1a is on the left side, in the front portion of the transport object 11, of the reference line 11a, and on the right side, in the rear portion of the transport object 11, of the reference line 11a. In this case, in the yaw direction display portion 71 on the front side, the yaw direction deviation display portion 71a on the left side lights up, and in the yaw direction display portion 71 on the rear side, the yaw direction deviation display portion 71a on the right side lights up. The display of the yaw direction display portion 71 indicates the moving direction of the transport object 11 necessary to align the reference line 11a with the passage line P1a in the yaw direction (when viewed along the up-down direction). Specifically, the yaw direction display portion 71 indicates to the worker that the front portion of the transport object 11 needs to be moved leftward and the rear portion of the transport object 11 needs to be moved rightward.

When viewed along the up-down direction, it is assumed that the target passage line P1a is on the left side of the reference line 11a in each of the front portion and the rear portion of the transport object 11 (not illustrated). In this case, in the yaw direction display portion 71 on the front side, the yaw direction deviation display portion 71a on the left side lights up, and also in the yaw direction display portion 71 on the rear side, the yaw direction deviation display portion 71a on the left side lights up. In this case, the yaw direction display portion 71 indicates to the worker that the entire transport object 11 (the front portion and the rear portion) needs to be moved to the left side.

The yaw direction matching display portion 71b displays that the position of the transport object 11 in the yaw direction is in the state of matching with the target position P1. The yaw direction matching display portion 71b displays that the reference line 11a and the passage line P1a match with each other when viewed along the up-down direction. More specifically, when the passage line P1a and the reference line 11a match with each other as viewed along the up-down direction, each of the yaw direction matching display portion 71b on the front side and the yaw direction matching display portion 71b on the rear side lights up. The yaw direction matching display portion 71b may display a character ("M" (Match) or the like) or may display a figure or the like.

For example, in each of the yaw direction display portions 71 on the front side and the rear side, either the two yaw direction deviation display portions 71a or one yaw direction matching display portion 71b (alternatively) lights up. As a result, the worker can easily know whether or not the transport object 11 is in the matching state in the yaw direction and which way the transport object 11 should be moved in the yaw direction.

For example, a display color of the yaw direction deviation display portion 71a is different from a display color of the yaw direction matching display portion 71b. Due to this difference in display color, the worker can easily know that the position of the transport object 11 in the yaw direction matches the target position P1.

The two pitch direction display portions 73 and the two roll direction display portions 75 illustrated in FIG. 5 are also provided similarly to the two yaw direction display portions 71, and operate similarly to the yaw direction display portions 71. As to the pitch direction display portion 73 and the roll direction display portion 75, differences from the yaw direction display portion 71 will be mainly described.

The two pitch direction display portions 73 (gradient display portions) display information on the pitch direction of the transport object 11 (see FIG. 4) and the like. The two pitch direction display portions 73 are provided at intervals in the front-rear direction. Each pitch direction display portion 73 includes a pitch direction deviation display portion 73a and a pitch direction matching display portion 73b. The pitch direction deviation display portion 73a displays an orientation of a position deviation of the transport object 11 in the pitch direction. The pitch direction deviation display portion 73a may display a character (such as "U (Up)" or "D (Down)") indicating an orientation in which the transport object 11 should be rotated, or may display a figure (such as an arrow) indicating an orientation in which the transport object 11 should be rotated (the same applies to the roll direction deviation display portion 75a). The pitch direction matching display portion 73b displays that the position of the transport object 11 in the pitch direction is in the state of matching with the passage line P1a. The pitch direction matching display portion 73b conducts display indicating that the reference line 11a and the passage line P1a are in the matching state when viewed from the width direction. For example, the pitch direction matching display portion 73b displays at least one of a character (such as "M (Match)") and a figure (the same applies to the roll direction matching display portion 75b).

The two roll direction display portions 75 display information on the roll direction of the transport object 11 (see FIG. 4). The two roll direction display portions 75 are provided at intervals in the width direction. Each roll direction display portion 75 includes a roll direction deviation display portion 75a and a roll direction matching display portion 75b. The roll direction deviation display portion 75a displays an orientation of a position deviation of the transport object 11 in the roll direction. The roll direction matching display portion 75b displays that the position of the transport object 11 in the roll direction is in the state of matching with the target position P1. For example, it is assumed that a state in which the width direction (the right-left direction) of the transport object 11 illustrated in FIG. 4 matches the horizontal direction is set as the target position P1. In this case, the roll direction matching display portion 75b conducts display indicating that the width direction of the transport object 11 and the horizontal direction are in the matching state when viewed from the front-rear direction.

As illustrated in FIG. 5, the display portion 70 may include a longitudinal direction display portion 77. The longitudinal direction display portion 77 displays information on the position of the transport object 11 in the longitudinal direction (the front-rear direction) of the transport object 11 (see FIG. 4), and the longitudinal direction display portion 77 displays information on the coordinates of the transport object 11 in the direction along the passage line P1 (see FIG. 4). The longitudinal direction display portion 77 includes, for example, a longitudinal direction deviation display portion 77a and a longitudinal direction matching display portion 77b. The longitudinal direction deviation display portion 77a displays an orientation of a position deviation in the front-rear direction. The longitudinal direction matching display portion 77b displays that the position of the transport object 11 in the front-rear direction is in the state of matching with the target position P1. Specific display contents of the longitudinal direction display portion 77 are similar to those of the yaw direction display portion 71, for example.

### (Other Operations of Controller 80)

The controller 80 illustrated in FIG. 3 may cause the external display portion 90 to display information on a position deviation. The external display portion 90 may display the same information as the information displayed on the display portion 70. The external display portion 90 may display information that relates to a position deviation and is different from the information displayed on the display portion 70. Note that the input portion inputs a signal corresponding to the position deviation also to the external display portion 90, and causes the external display portion 90 to display the information on the position deviation.

The controller 80 stores conditions (e.g., a progress status) of the transportation work of the transport object 11 (see FIG. 4) in the log portion 85. The controller 80 may cause at least one of the display portion 70 and the external display portion 90 to display the information stored in the log portion 85.

An effect of the guidance system 1 illustrated in FIG. 1 is as follows.

The guidance system 1 includes the guidance device 40 that can be attached to the transport object 11, and the controller 80. As illustrated in FIG. 4, the guidance device 40 includes a frame portion 41, the detection portion 45, and the display portion 70. The frame portion 41 can be attached to the transport object 11. The detection portion 45 is provided on the frame portion 41, and serves to detect coordinates and an attitude of the transport object 11 to which the frame portion 41 is attached.

The display portion 70 is provided in the frame portion 41. Information of the target position P1 of the transport object 11 is set in the controller 80 (see FIG. 3). The controller 80 calculates the detected position P2, which is a current position of the transport object 11, based on a value detected using the detection portion 45. The controller 80 calculates a position deviation that is a deviation of the detected position P2 from the target position P1. The controller 80 causes the display portion 70 to display information of a position deviation.

According to the above configuration, the controller 80 (see FIG. 3) calculates a position deviation of the current detected position P2 of the transport object 11 from the target position P1 of the transport object 11. Then, the controller 80 causes the display portion 70 to display the information of the position deviation (information for guiding the transportation of the transport object 11). As described above, the display portion 70 is provided in the frame portion 41 that can be attached to the transport object 11. Therefore, the worker (at least one of an operator of the work machine 20 (see FIG. 2) and a worker in the vicinity of the transport object 11) can easily visually recognize the display portion 70 and the transport object 11 at the same time. Therefore, the guidance system 1 (see FIG. 1) allows the worker to visually recognize the information for assisting the transportation of the transport object 11 and the transport object 11 at the same time. As a result, it is possible to easily conduct the work of transporting the transport object 11 to the target position P1. For example, in a case where a worker is present in the vicinity of the transport object 11, it is easy to cause an operator of the work machine 20 to visually recognize the information for assisting the transportation of the transport object 11 and the worker around the transport object 11 at the same time.

In addition, the predetermined deviation D0, which is a threshold related to a magnitude of the position deviation, is set in the controller 80 (see FIG. 3). In a case where the magnitude of the position deviation is equal to or less than the predetermined deviation D0 (see FIG. 11), the controller 80 causes the display portion 70 to conduct the matching display. The matching display is a display indicating that the target position P1 and the detected position P2 are in the matching state.

According to the above configuration, the worker can easily know that the target position P1 and the detected position P2 are in the matching state, that is, that the magnitude of the position deviation is equal to or less than the predetermined deviation D0 (see FIG. 11). As a result, it is possible to more easily conduct the work of transporting the transport object 11 to the target position P1.

In addition, the first deviation D1 and the second deviation D2 are set in the controller 80 (see FIG. 3) as illustrated in FIG. 11. The first deviation D1 is a threshold related to a magnitude of the position deviation. The second deviation D2 is a threshold related to a magnitude of the position deviation, the threshold being larger than the first deviation D1. When the position deviation changes from a value exceeding the first deviation D1 to a value equal to or less than the first deviation D1, the controller 80 causes the display portion 70 (see FIG. 4) to start the matching display. The matching display is a display indicating that the target position P1 and the detected position P2 are in the matching state. When the position deviation changes from a value equal to or less than the second deviation D2 to a value exceeding the second deviation D2 while the display portion 70 (see FIG. 4) conducts the matching display, the controller 80 causes the display portion 70 (see FIG. 4) to end the matching display.

According to the above configuration, the matching display of the display portion 70 (see FIG. 4) is started when the position deviation of the transport object 11 (see FIG. 4) becomes equal to or less than the first deviation D1. When the position deviation of the transport object 11 becomes a value exceeding the second deviation D2 (see FIG. 11) which is larger than the first deviation D1, the matching display on the display portion 70 (see FIG. 4) ends. Therefore, when the transport object 11 illustrated in FIG. 1 is disposed in the vicinity of the target position PI, it is possible to suppress the display portion 70 (see FIG. 4) from repeatedly turning on and off the matching display. As a result, the worker will not be confused by the repetition of the ON/OFF display as described above, and the workability of the work of transporting the transport object 11 illustrated in FIG. 4 to the target position P1 can be improved.

In addition, the target position P1 illustrated in FIG. 4 includes a target attitude of the transport object 11. The detected position P2 includes a detected attitude which is a current attitude of the transport object 11, the attitude being calculated based on a value detected using the detection portion 45. The position deviation includes an attitude deviation that is a deviation of a detected attitude from a target attitude. The controller 80 (see FIG. 3) causes the display portion 70 to display information of an attitude deviation.

According to the above configuration, the attitude deviation that is the deviation of the current detected attitude from the target attitude of the transport object 11 is displayed on the display portion 70. Therefore, the worker who looks at the display portion 70 can easily conduct the work of transporting the transport object 11 such that the attitude of the transport object 11 becomes the target attitude. Specifically, in a case where the attitude of the transport object 11 only needs to be matched with the target attitude (the "second and subsequent transport objects 11" and the like), the work of disposing the reference line 11a of the transport object 11 on the passage line P1a can be easily conducted.

The target position P1 includes target coordinates which are coordinates of the transport object 11. The detected position P2 includes detected coordinates which are coordinates of the transport object 11 calculated based on a value detected using the detection portion 45. The position deviation includes a coordinate deviation that is a deviation of the detected coordinates from the target coordinates. The controller 80 causes the display portion 70 to display information of the coordinate deviation.

According to the above configuration, the coordinate deviation that is a deviation of the current detected coordinates from the target coordinates of the transport object 11 is displayed on the display portion 70. Therefore, the worker who looks at the display portion 70 can easily conduct the work of transporting the transport object 11 such that the coordinates of the transport object 11 become the target coordinates. Specifically, for example, with the above configuration, the work of disposing the "first transport object 11" at the target position P1 can be easily conducted.

As illustrated in FIG. 3, the guidance system 1 includes the external display portion 90 provided outside the guidance device 40. The controller 80 causes the external display portion 90 to display information on the position deviation.

According to the above configuration, a worker who cannot see the display portion 70 can also know the information on the position deviation. As a result, it is easy to share the work conditions between, for example, a worker who can see the display portion 70 and a worker who cannot see the display portion 70.

As illustrated in FIG. 7, the guidance system 1 includes the electronic tag 13 that stores information on the transport object 11, and a reading device 47. The electronic tag 13 is provided in the transport object 11. The reading device 47 reads, from the electronic tag 13, information of the transport object 11 to which the guidance device 40 is attached and transmits the information to the controller 80 (see FIG. 3).

According to the above configuration, the information of the transport object 11 to which the guidance device 40 is attached can be easily input to the controller 80 (see FIG. 3).

As illustrated in FIG. 2, the guidance system 1 includes the work machine 20 that has the machine main body 21 and the attachment 22 attached to the machine main body 21 and is capable of transporting the transport object 11. The attachment 22 includes the proximal end attachment 23 attached to the machine main body 21, and the distal end attachment 30 attached to the distal end portion of the proximal end attachment 23.

The distal end attachment 30 includes a rotation device 31 and a gripping device 33. The rotation device 31 is attached to the distal end portion of the proximal end attachment 23. The gripping device 33 is attached to the rotation device 31 and is rotatable with respect to the proximal end attachment 23 by the rotation device 31. The gripping device 33 grips the transport object 11 to which the guidance device 40 is being attached. In other words, the rotation device 31 is connected to the proximal end attachment 23 so as to be interposed between the gripping device 33 and the distal end portion of the proximal end attachment 23, and is capable of rotating the gripping device 33 around at least one rotation center axis with respect to the proximal end attachment 23.

According to the above configuration, the transport object 11 (the integrated unit 10) to which the guidance device 40 is attached is gripped by the gripping device 33 rotatable with respect to the proximal end attachment 23. Therefore, the transport object 11 can be easily transported to the target position P1 by the gripping device 33 provided in the attachment 22 of the work machine 20. Here, in a case where the transport object 11 is lifted and transported by a crane (in a case of lifting work), the following problem may occur. It is prohibited by law that a worker directly touches a lifting load (here, the transport object 11). For this reason, there is a case where a plurality of (for example, about two) slinging workers conduct the work while pulling a lifting load through an assisting rope or the like and balancing the lifting load. On the other hand, in the present embodiment, the transport object 11 is transported in a state of being gripped by the gripping device 33. Therefore, no slinging worker is required. It is accordingly possible to reduce the number of workers required for the transportation work of the transport object 11 (labor saving can be achieved).

The above embodiment may be variously modified. For example, the arrangement and the shape of each component of the above embodiment may be changed. For example, the connections in the block diagram shown in FIG. 3 may be modified. For example, the threshold (such as the predetermined deviation D0) may be a constant value, may be changed by manual operation, or may be automatically changed according to some condition. For example, the number of the components of the above embodiment may be changed, and some of the components may not be provided. For example, those described as a plurality of members or portions different from each other may be one member or portion. For example, what has been described as one member or portion may be provided separately in a plurality of different members or portions.

The present invention provides a guidance system that assists work for transporting a transport object to a target position, the guidance system including a guidance device attachable to a transport object, and a controller. The guidance device includes: a frame portion attachable to the transport object so as to be transported to a target position integrally with the transport object; a detection portion that is provided at least on the frame portion and is capable of detecting coordinates and an attitude of the transport object to which the frame portion is attached; and a display portion provided in the frame portion. The controller includes: a storage portion that stores information of a target position of the transport object; a position calculation portion that calculates a detected position that is a current position of the transport object based on a detection result of the detection portion, and further calculates a position deviation that is a deviation of the detected position from the target position; and an input portion that inputs a signal corresponding to the position deviation to the display portion and causes the display portion to display information of the position deviation.

According to this configuration, since a worker positioned around a transport object can easily visually recognize the display portion provided in the guidance device and the transport object at the same time, the worker is allowed to visually recognize information of a position deviation for assisting transportation of the transport object and the transport object at the same time.

In the above configuration, it is preferable that the storage portion of the controller further stores a deviation threshold that is a threshold related to a magnitude of the position deviation, and the input portion of the controller inputs, to the display portion, a signal corresponding to a matching display, which is a display indicating that the target position and the detected position match with each other, and causes the display portion to display the matching display in a case where the position deviation is equal to or less than the deviation threshold.

According to this configuration, the worker can easily know that a target position and a detected position are in a matching state, that is, that a magnitude of a position deviation is equal to or less than a deviation threshold. As a result, the worker can more easily conduct the work of transporting the transport object to the target position.

In the above configuration, it is preferable that the storage portion of the controller stores: a first deviation threshold that is a threshold related to a magnitude of the position deviation; and a second deviation threshold that is a threshold related to a magnitude of the position deviation and is larger than the first deviation threshold, and the input portion of the controller, in a case where the position deviation changes from a value exceeding the first deviation threshold to a value equal to or less than the first deviation threshold, inputs, to the display portion, a signal corresponding to a matching display that is a display indicating that the target position and the detected position match with each other, and causes the display portion to start the matching display, and in a case where the position deviation changes from a value equal to or less than the second deviation threshold to a value exceeding the second deviation threshold while the display portion displays the matching display, inputs a signal for ending the matching display to the display portion.

According to this configuration, it is possible to suppress the display portion from repeatedly turning on and off the matching display when a transport object is disposed in the vicinity of a target position. As a result, the worker will not be confused by such repetition of the ON/OFF display as described above, and the workability of the work of transporting the transport object to the target position can be improved.

In the above configuration, it is preferable that the information of the target position stored in the storage portion includes information of a target attitude of the transport object at the target position, the position calculation portion calculates, as the detected position, a detected attitude that is a current attitude of the transport object based on a detection result of the detection portion, and further calculates, as the position deviation, an attitude deviation that is a deviation of the detected attitude from the target attitude, and the input portion of the controller inputs a signal corresponding to the attitude deviation to the display portion, and causes the display portion to display information of the attitude deviation.

According to this configuration, the attitude deviation that is a deviation of the current detected attitude from the target attitude of the transport object is displayed on the display portion. Therefore, the worker who looks at the display portion can easily conduct the work of transporting the transport object such that an attitude of the transport object becomes a target attitude.

In the above configuration, it is preferable that the information of the target position stored in the storage portion includes information of target coordinates which are coordinates of the transport object at the target position, the position calculation portion calculates, as the detected position, detected coordinates that are current coordinates of the transport object based on a detection result of the detection portion, and further calculates, as the position deviation, a coordinate deviation that is a deviation of the detected coordinates from the target coordinates, and the input portion of the controller inputs a signal corresponding to the coordinate deviation to the display portion, and causes the display portion to display information of the coordinate deviation.

According to this configuration, the coordinate deviation that is a deviation of the current detected coordinates from the target coordinates of the transport object is displayed on the display portion. Therefore, the worker who looks at the display portion can easily conduct the work of transporting the transport object such that the coordinates of the transport object become the target coordinates.

In the above configuration, it is preferable to further include an external display portion disposed at a position away from the guidance device, in which the input portion of the controller further inputs a signal corresponding to the position deviation to the external display portion, and causes the external display portion to display information on the position deviation.

According to this configuration, the worker who cannot see the display portion can also know the information on the position deviation. As a result, it is possible to share work conditions between a worker who can see the display portion and a worker who cannot see the display portion (a worker who can see an external display portion).

In the above configuration, it is preferable to further include: an electronic tag attached to the transport object and storing information on the transport object; and a reading device that reads, from the electronic tag, information of the transport object to which the guidance device is attached, and transmits the information to the controller.

According to this configuration, information of the transport object to which the guidance device is attached can be easily input to the controller.

In the above configuration, it is preferable to further include a work machine that has a machine main body and an attachment attached to the machine main body and is capable of transporting the transport object, in which the attachment includes: a proximal end attachment attached to the machine main body; and a distal end attachment attached to a distal end portion of the proximal end attachment; the distal end attachment including: a gripping device capable of gripping the transport object to which the guidance device is being attached; and a rotation device connected to the gripping device and the distal end portion of the proximal end attachment and capable of rotating the gripping device around at least one rotation center axis with respect to the proximal end attachment.

According to this configuration, the transport object can be easily transported to the target position by the gripping device provided in the attachment of the work machine. In addition, the number of workers required for the work of transporting the transport object can be reduced as compared with a case where the transport object is transported by a crane.

## Claims

1. A guidance system that assists work for transporting a transport object to a target position, the guidance system comprising:
a guidance device attachable to a transport object; and
a controller,
wherein the guidance device includes:
a frame portion attachable to the transport object so as to be transported to a target position integrally with the transport object;
a detection portion that is provided at least on the frame portion and is capable of detecting coordinates and an attitude of the transport object to which the frame portion is attached; and
a display portion provided in the frame portion, and
the controller includes:
a storage portion that stores information of a target position of the transport object;
a position calculation portion that calculates a detected position that is a current position of the transport object based on a detection result of the detection portion, and further calculates a position deviation that is a deviation of the detected position from the target position; and
an input portion that inputs a signal corresponding to the position deviation to the display portion and causes the display portion to display information of the position deviation.

2. The guidance system according to claim 1, wherein
the storage portion of the controller further stores a deviation threshold that is a threshold related to a magnitude of the position deviation, and
the input portion of the controller inputs, to the display portion, a signal corresponding to a matching display, which is a display indicating that the target position and the detected position match with each other, and causes the display portion to display the matching display in a case where the position deviation is equal to or less than the deviation threshold.

3. The guidance system according to claim 1, wherein
the storage portion of the controller stores
a first deviation threshold that is a threshold related to a magnitude of the position deviation, and
a second deviation threshold that is a threshold related to a magnitude of the position deviation and is larger than the first deviation threshold, and
the input portion of the controller,
in a case where the position deviation changes from a value exceeding the first deviation threshold to a value equal to or less than the first deviation threshold, inputs, to the display portion, a signal corresponding to a matching display that is a display indicating that the target position and the detected position match with each other, and causes the display portion to start the matching display, and
in a case where the position deviation changes from a value equal to or less than the second deviation threshold to a value exceeding the second deviation threshold while the display portion displays the matching display, a signal for ending the matching display to the display portion.

4. The guidance system according to any one of claims 1 to 3, wherein
the information of the target position stored in the storage portion includes information of a target attitude of the transport object at the target position,
the position calculation portion calculates, as the detected position, a detected attitude that is a current attitude of the transport object based on a detection result of the detection portion, and further calculates, as the position deviation, an attitude deviation that is a deviation of the detected attitude from the target attitude, and
the input portion of the controller inputs a signal corresponding to the attitude deviation to the display portion, and causes the display portion to display information of the attitude deviation.

5. The guidance system according to claim 4, wherein
the information of the target position stored in the storage portion includes information of target coordinates which are coordinates of the transport object at the target position,
the position calculation portion calculates, as the detected position, detected coordinates that are current coordinates of the transport object based on a detection result of the detection portion, and further calculates, as the position deviation, a coordinate deviation that is a deviation of the detected coordinates from the target coordinates, and
the input portion of the controller inputs a signal corresponding to the coordinate deviation to the display portion, and causes the display portion to display information of the coordinate deviation.

6. The guidance system according to any one of claims 1 to 3, further comprising an external display portion disposed at a position away from the guidance device,
wherein the input portion of the controller further inputs a signal corresponding to the position deviation to the external display portion, and causes the external display portion to display information on the position deviation.

7. The guidance system according to any one of claims 1 to 3, further comprising:
an electronic tag attached to the transport object and storing information on the transport object; and
a reading device that reads, from the electronic tag, information of the transport object to which the guidance device is attached, and transmits the information to the controller.

8. The guidance system according to any one of claims 1 to 3, further comprising a work machine that has a machine main body and an attachment attached to the machine main body and is capable of transporting the transport object,
wherein the attachment includes:
a proximal end attachment attached to the machine main body; and
a distal end attachment attached to a distal end portion of the proximal end attachment;
the distal end attachment including:
a gripping device capable of gripping the transport object to which the guidance device is being attached; and
a rotation device connected to the gripping device and the distal end portion of the proximal end attachment and capable of rotating the gripping device around at least one rotation center axis with respect to the proximal end attachment.
